# EUROPEAN PATENT APPLICATION

(11) **EP 4 760 105 A1**
(43) Date of publication of application: **17.06.2026**
(21) Application number: 25853023.7
(22) Date of filing: 24.09.2025
(51) Int. Cl.: F04C 29/04, F04C 18/32, F04C 29/12, F16K 15/16

(54) **ROTARY COMPRESSOR AND REFRIGERATION CYCLE DEVICE**

(30) Priority: 26.09.2024 JP 2024167773; 10.09.2025 JP 2025150559
(71) Applicant: DAIKIN INDUSTRIES, LTD., Osaka-Shi, Osaka 530-0001 (JP)
(72) Inventor: YAMAGUCHI Junki, Osaka-shi, Osaka 530-0001 (JP); KIKUTAKE Daiki, Osaka-shi, Osaka 530-0001 (JP); UENO Hiromichi, Osaka-shi, Osaka 530-0001 (JP); TANAKA Eisei, Osaka-shi, Osaka 530-0001 (JP); MASUDA Naoki, Osaka-shi, Osaka 530-0001 (JP); NISHIDE Yohei, Osaka-shi, Osaka 530-0001 (JP)
(74) Representative: Goddar, Heinz J.
(86) International application number: PCT/JP2025/033467
(87) International publication number: WO 2026/070807

(57) **Abstract**

An injection mechanism (40) includes a valve chamber (50), a first flow path (42, 43) that allows an injection pipe (39) and the valve chamber (50) to communicate with each other and has an outflow port (44) facing the valve chamber (50), and a second flow path (45) that is located at one end of the valve chamber (50) in a first direction and allows the valve chamber (50) and a compression chamber (15b, 25b) to communicate with each other. An inner surface forming the valve chamber (50) includes a first surface (51) forming the outflow port (44), and an inner surface forming the first flow path (42, 43) includes a first inclined surface (47) that is continuous with the first surface (51) and is inclined toward one end in the first direction to approach the second flow path (45) as the first inclined surface (47) extends toward the first surface (51).

## Description

### TECHNICAL FIELD

The present disclosure relates to a rotary compressor and a refrigeration cycle apparatus including the rotary compressor. The rotary compressor is a compressor that compresses gas in a compression chamber formed in a cylinder by eccentrically rotating a roller in the cylinder. The rotary compressor generally has a vane for partitioning a cylinder chamber into a suction chamber and a compression chamber. There are various types of rotary compressors, such as a so-called rolling piston compressor in which a roller eccentrically rotates while a vane separated from the roller abuts on the roller, a so-called swing compressor in which a vane integrally formed with the roller swings with the eccentric rotation of the roller, and a so-called hinge vane compressor in which the roller eccentrically rotates with a tip of the vane rotatably fitted with an outer peripheral surface of the roller.

### BACKGROUND ART

The rotary compressor disclosed in Patent Document 1 has an injection mechanism for introducing a refrigerant into the compressor. The injection mechanism includes a flow path for sending the refrigerant flowing through an injection pipe to the compression chamber, a valve chamber formed in the flow path, a reed valve disposed in the valve chamber, and a valve retainer for regulating the operation of the reed valve. When the reed valve opens an outflow port that opens to the valve chamber, the refrigerant in the injection pipe is introduced into the compression chamber.

In the rotary compressor disclosed in Patent Document 1, an inner peripheral surface of an injection flow path and a bottom surface of the valve chamber are orthogonal to each other at an outlet of the injection flow path.

### CITATION LIST

### PATENT DOCUMENT

Patent Document 1: Chinese Patent Publication No. 103557158

### SUMMARY OF THE INVENTION

### TECHNICAL PROBLEM

In the configuration of a conventional injection mechanism, a refrigerant flows from an injection flow path to a valve chamber, and then turns its flow direction by about 90 degrees to flow toward the cylinder chamber. If it is required to bend the flow direction by about 90 degrees, the flow resistance increases, and the flow rate of the refrigerant to the cylinder chamber may decrease.

An object of the present disclosure is to increase the flow rate of the refrigerant flowing into the cylinder chamber by the injection mechanism.

### SOLUTION TO THE PROBLEM

A first aspect is directed to a rotary compressor. The rotary compressor includes: a drive shaft (7); a compression mechanism (10) including an annular cylinder (11, 21), a roller (12, 22) configured to be driven by the drive shaft (7) and eccentrically rotate in the cylinder (11, 21), a vane (13, 23) configured to partition a cylinder chamber (15, 25) between the cylinder (11, 21) and the roller (12, 22) into a suction chamber (15a, 25a) and a compression chamber (15b, 25b), a suction port (17, 27) configured to send a low-pressure refrigerant to the suction chamber (15a, 25a); and an injection pipe (39). The compression mechanism (10) is provided with an injection mechanism (40) configured to introduce a refrigerant into the compression chamber (15b, 25b). The injection mechanism (40) includes: a valve chamber (50); a first flow path (42, 43) that is configured to allow the injection pipe (39) and the valve chamber (50) to communicate with each other and has an outflow port (44) facing the valve chamber (50); a reed valve (70) that is disposed in the valve chamber (50) and configured to open and close the outflow port (44) of the first flow path (42, 43); a valve retainer (60) that is disposed in the valve chamber (50), extends in the first direction, has a thickness in the second direction, and is configured to regulate an operation of the reed valve (70); and a second flow path (45) that is located at one end of the valve chamber (50) in the first direction and is configured to allow the valve chamber (50) and the compression chamber (15b, 25b) to communicate with each other. An inner surface forming the valve chamber (50) has a first surface (51) facing the valve retainer (60) in the second direction across the reed valve (70) and having the outflow port (44). An inner surface forming the first flow path (42, 43) has a first inclined surface (47) that is continuous with the first surface (51) and is inclined toward the one end in the first direction with respect to the second direction to approach the second flow path (45) as the first inclined surface (47) extends toward the first surface (51).

In the first aspect, the refrigerant flowing through the first flow path (42, 43) flows along the first inclined surface (47) toward the second flow path (45). This reduces the flow resistance of the refrigerant coming from the first flow path (42, 43) toward the second flow path (45), allowing the refrigerant to smoothly flow from the first flow path (42, 43) to the cylinder chamber (15, 25). Thus, the compressor can increase the flow rate of the refrigerant flowing into the cylinder chamber (15, 25) by the injection mechanism (40).

A second aspect is an embodiment of the first aspect. In the second aspect, in a cross section passing through a center line (L) of the reed valve (70) extending in the first direction and including the second direction, the first inclined surface (47) is located at a portion of the inner surface forming the first flow path (42, 43) at the one end in the first direction.

In the second aspect, the first flow path (42, 43) can have a larger flow path area. This can increase the flow rate of the refrigerant flowing into the cylinder chamber (15, 25) by the injection mechanism (40).

A third aspect is an embodiment of the first or second aspect. In the third aspect, the reed valve (70) includes: a base portion (71) that is formed at the other end of the reed valve (70) in the first direction and fixed to the valve retainer (60); a tip portion (72) that is formed at one end of the reed valve (70) in the first direction and configured to open and close the outflow port (44); and a movable portion (73) that is configured to connect the base portion (71) and the tip portion (72) and is movable toward the valve retainer (60) together with the tip portion (72). In a cross section passing through a center line (L) of the reed valve (70) extending in the first direction and including the second direction, the inner surface forming the first flow path (42, 43) includes a second inclined surface (48) that is located at the other end in the first direction, continuous with the first surface (51), and inclined toward the other end in the first direction with respect to the second direction to be separated from the second flow path (45) as the second inclined surface (48) extends toward the first surface (51).

In the third aspect, part the refrigerant flowing through the first flow path (42, 43) flows toward the other end in the first direction along the second inclined surface (48), and the reed valve (70) can be pushed up by the refrigerant. This can increase the flow rate of the refrigerant flowing into the cylinder chamber (15, 25) by the injection mechanism (40).

A fourth aspect is an embodiment of any one of the first to third aspects. In the fourth aspect, the reed valve (70) includes a tip portion (72) that is formed at one end of the reed valve (70) in the first direction and configured to open and close the outflow port (44). The first surface (51) includes a valve seat surface (58) that is configured to be in contact with the tip portion (72) of the reed valve (70) in a closed state and a groove (59) that is formed around the valve seat surface (58) and overlaps an outer edge of the tip portion (72) as viewed in the second direction. The inner surface forming the first flow path (42, 43) includes a straight portion (43a) located upstream of the first inclined surface (47) and extending in the second direction. In the second direction, a distance (D1) between the valve seat surface (58) and a boundary (B) between the first inclined surface (47) and the straight portion (43a) is longer than a distance (D2) between the valve seat surface (58) and the bottom surface of the groove (59).

In the fourth aspect, the first inclined surface (47) can be made longer, allowing the refrigerant to easily form the flow from the first flow path (42, 43) toward the second flow path (45). This can increase the flow rate of the refrigerant flowing into the cylinder chamber (15, 25) by the injection mechanism (40).

A fifth aspect is an embodiment of the first aspect. In the fifth aspect, the first flow path (42, 43) includes an inclined flow path (249) that includes the first inclined surface (47) and is inclined toward the one end in the first direction with respect to the second direction so that a center line (CL) of the first flow path (42, 43) approaches the second flow path (45) as the inclined flow path (249) extends toward the first surface (51).

In the fifth aspect, the inclined flow path (249) allows the refrigerant flowing through the first flow path (42, 43) to easily flow toward the second flow path (45). This can increase the flow rate of the refrigerant flowing into the cylinder chamber (15, 25) by the injection mechanism (40).

A sixth aspect is directed to a refrigeration cycle apparatus. The refrigeration cycle apparatus includes a refrigerant circuit (101) including the rotary compressor (1) of any one of the first to fifth aspects.

### BRIEF DESCRIPTION OF THE DRAWINGS

[FIG. 1] FIG. 1 is a piping diagram illustrating a configuration of a refrigeration cycle apparatus according to an embodiment.
[FIG. 2] FIG. 2 is a longitudinal cross-sectional view of a compressor according to the embodiment.
[FIG. 3] FIG. 3 is an enlarged view of a compression mechanism shown in FIG. 2.
[FIG. 4] FIG. 4 is a cross-sectional view of the compression mechanism taken along line IV-IV shown in FIG. 3, with a first roller at a rotational angle of 90°.
[FIG. 5] FIG. 5 is a cross-sectional view of the compression mechanism taken along line V-V shown in FIG. 3, with a second roller at a rotational angle of 270°.
[FIG. 6] FIG. 6 is an enlarged longitudinal cross-sectional view of a main part of an injection mechanism.
[FIG. 7] FIG. 7 is a plan view of a cylinder and an injection element as viewed in an axial direction.
[FIG. 8] FIG. 8 is an exploded perspective view of a major part of the injection element.
[FIG. 9] FIG. 9 is a cross-sectional view of the injection element as viewed in the third direction, with a reed valve in a closed state.
[FIG. 10] FIG. 10 is a cross-sectional view of the injection element as viewed in the third direction, with the reed valve in an open state.
[FIG. 11] FIG. 11 is an enlarged plan view of a valve body and its periphery as viewed in the second direction.
[FIG. 12] FIG. 12 is an enlarged cross-sectional view of an outflow port of the injection element and its periphery as viewed in the third direction, with the reed valve in an open state.
[FIG. 13] FIG. 13 is an enlarged plan view of a valve body and its periphery of an injection element according to a first variation as viewed in the second direction.
[FIG. 14] FIG. 14 is an enlarged plan view of a valve body and its periphery of an injection element according to a second variation as viewed in the second direction.
[FIG. 15] FIG. 15 is an enlarged cross-sectional view of an outflow port of the injection element according to the second variation and its periphery as viewed in the third direction.
[FIG. 16] FIG. 16 is a cross-sectional view of an injection element according to a third variation as viewed in the third direction.

### DESCRIPTION OF EMBODIMENTS

Embodiments will be described. A compressor (1) of the present embodiment is applied to an air conditioner (100). The air conditioner (100) is an example of a refrigeration cycle apparatus that performs a vapor compression refrigeration cycle.

### -Air Conditioner-

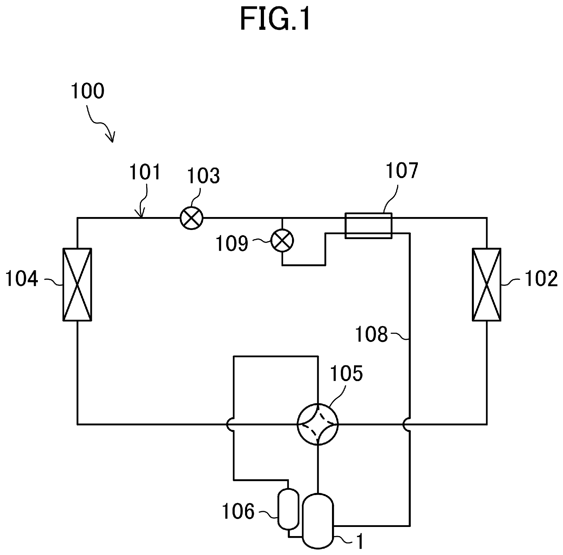

As illustrated in FIG. 1, the air conditioner (100) includes a refrigerant circuit (101). The refrigerant circuit (101) includes a compressor (1), an outdoor heat exchanger (102), an expansion valve (103), an indoor heat exchanger (104), a four-way switching valve (105), an accumulator (106), an internal heat exchanger (107), an intermediate flow path (108), and a control valve (109). The expansion valve (103) is an example of a decompression mechanism. The decompression mechanism may be a capillary tube.

The internal heat exchanger (107) exchanges heat between the refrigerant that has passed through the outdoor heat exchanger (102) and the refrigerant that has passed through the control valve (109) in the intermediate flow path (108). An inlet end of the intermediate flow path (108) is connected between the internal heat exchanger (107) and the expansion valve (103). An outlet end of the intermediate flow path (108) communicates with the compression chamber of the compressor (1).

The four-way switching valve (105) switches between a first state indicated by solid lines in FIG. 1 and a second state indicated by broken lines in FIG. 1 so that the air conditioner (100) switches between a cooling operation and a heating operation. In the cooling operation, the four-way switching valve (105) in the first state allows the discharge side of the compressor (1) to communicate with the outdoor heat exchanger (102) and allows the suction side of the compressor (1) to communicate with the indoor heat exchanger (104). In the heating operation, the four-way switching valve (105) in the second state allows the discharge side of the compressor (1) to communicate with the indoor heat exchanger (104) and allows the suction side of the compressor (1) to communicate with the outdoor heat exchanger (102).

### <Operation of Air Conditioner>

The air conditioner (100) performs the cooling operation and the heating operation. In the cooling operation, the four-way switching valve (105) is set to the first state, and the refrigerant circulates through the refrigerant circuit (101). In the refrigerant circuit (101), the outdoor heat exchanger (102) functions as a radiator, and the indoor heat exchanger (104) functions as an evaporator. The air cooled by the indoor heat exchanger (104) is supplied to an indoor space.

In the heating operation, the four-way switching valve (105) is set to the second state, and the refrigerant circulates in the refrigerant circuit (101). In the refrigerant circuit (101), the indoor heat exchanger (104) functions as a radiator, and the outdoor heat exchanger (102) functions as an evaporator. The air heated by the indoor heat exchanger (104) is supplied to the indoor space.

In the cooling operation, the refrigerant diverted to the intermediate flow path (108) is decompressed to an intermediate pressure by the control valve (109). The refrigerant that has passed through the control valve (109) passes through the internal heat exchanger (107), and is then introduced into the compression chamber of the compressor (1).

### -Configuration of Compressor-

The compressor (1) will be described in detail. In the following description, an "axial direction" indicates the direction in which the axis of the drive shaft (7) extends, a "radial direction" indicates the direction that is orthogonal to the axial direction and extends radially from the axis of the drive shaft (7), and a "rotational direction" indicates the direction in which the drive shaft (7) rotates.

The compressor (1) is a rotary compressor. The compressor (1) of the present embodiment is a so-called swing rotary compressor having a vane that is formed integrally with a roller and swings in accordance with eccentric rotation of the roller.

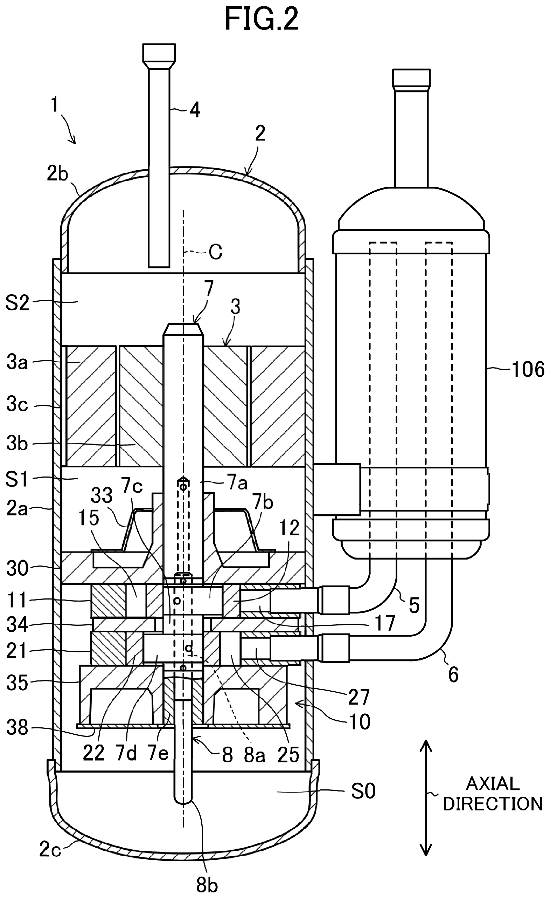

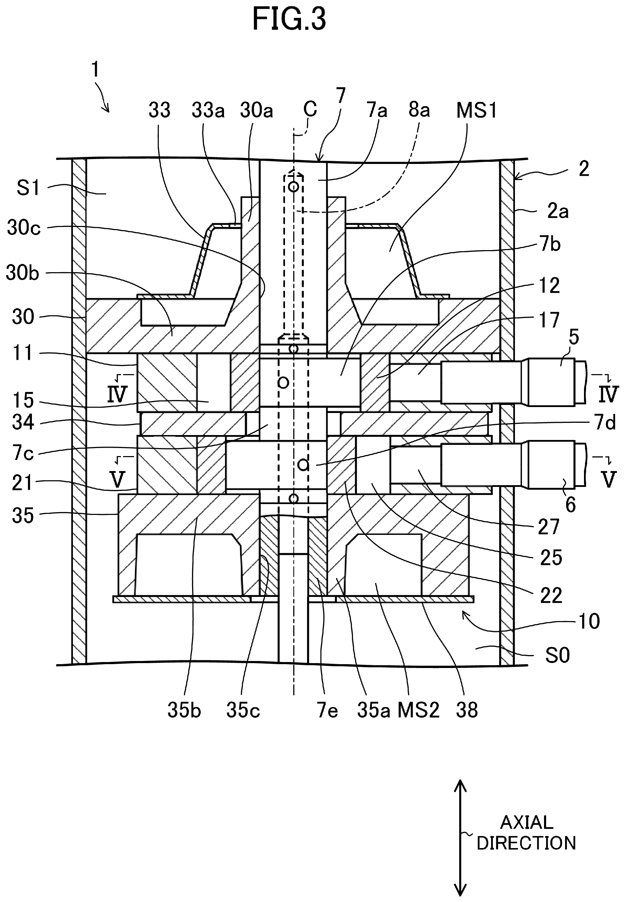

As illustrated in FIGS. 2 and 3, the compressor (1) includes a casing (2), the drive shaft (7), and the compression mechanism (10). The motor (3), the drive shaft (7), and the compression mechanism (10) are housed in the casing (2). The compression mechanism (10) is disposed below the motor (3).

### <Casing>

As illustrated in FIG. 2, the casing (2) is a vertically elongated cylindrical sealed container. The casing (2) includes a cylindrical barrel (2a), a top (2b) closing an upper end of the barrel (2a), and a bottom (2c) closing a lower end of the barrel (2a). An oil reservoir space (S0) is formed in a lower portion of the casing (2). The oil reservoir space (S0) is formed between the bottom (2c) and a lower portion of the barrel (2a). The oil reservoir space (S0) stores oil (refrigerating machine oil) for lubricating sliding portions of the compressor (1).

The compressor (1) is a so-called high-pressure dome compressor. In other words, an internal space of the casing (2) is filled with the refrigerant discharged from the compression mechanism (10). The internal space of the casing (2) includes a primary space (S1) between the compression mechanism (10) and the motor (3) and a secondary space (S2) above the motor (3).

### <Motor>

The motor (3) rotationally drives the drive shaft (7). The motor (3) is disposed in an upper portion of the internal space of the casing (2). The motor (3) includes a stator (3a) and a rotor (3b) disposed inside the stator (3a). The stator (3a) is fixed to an inner peripheral surface of the barrel (2a) of the casing (2) by shrink fitting or welding. The rotor (3b) is attached to the drive shaft (7). The compressor (1) is a so-called inverter compressor. The motor (3) is configured to have a variable operation frequency (rotational speed).

A stator groove (3c) (so-called core cut) is formed in an outer peripheral surface of the stator (3a) from one end to the other end in the axial direction. The primary space (S1) and the secondary space (S2) communicate with each other through the stator groove (3c) and a gap between the stator (3a) and the rotor (3b). The stator groove (3c) functions as a path for returning the oil in the secondary space (S2) to the oil reservoir space (S0).

### <Drive Shaft>

The drive shaft (7) connects the motor (3) and the compression mechanism (10). The drive shaft (7) rotates about its axis (C). The drive shaft (7) includes a main shaft portion (7a), a first eccentric portion (7b), an intermediate shaft portion (7c), a second eccentric portion (7d), and an auxiliary shaft portion (7e) arranged in this order from the top to the bottom. The main shaft portion (7a), the first eccentric portion (7b), the intermediate shaft portion (7c), the second eccentric portion (7d), and the auxiliary shaft portion (7e) are integrally formed.

Each of the first eccentric portion (7b) and the second eccentric portion (7d) is eccentric with respect to the axis (C). The direction of eccentricity of the first eccentric portion (7b) relative to the axis (C) is different by 180° from the direction of eccentricity of the second eccentric portion (7d) relative to the axis (C) in the rotational direction of the drive shaft (7).

The drive shaft (7) is provided with an oil supply mechanism (8). The oil supply mechanism (8) includes an in-shaft flow path (8a) formed inside the drive shaft (7) and a pump (8b) provided at the bottom end of the drive shaft (7). An inlet end of the in-shaft flow path (8a) is connected to the pump (8b). The pump (8b) pumps up the oil in the oil reservoir space (S0) and supplies the oil to the sliding portions of the compression mechanism (10) through the in-shaft flow path (8a). A centrifugal pump constitutes the pump (8b). The pump (8b) may be a positive-displacement pump.

### <Discharge Pipe and Suction Pipe>

The compressor (1) includes a discharge pipe (4), a first suction pipe (5), and a second suction pipe (6). The discharge pipe (4) is attached to the top (2b). The discharge pipe (4) penetrates the top (2b). The first suction pipe (5) and the second suction pipe (6) are attached to the lower portion of the barrel (2a). The first suction pipe (5) and the second suction pipe (6) penetrate the barrel (2a). The first suction pipe (5) is located above the second suction pipe (6).

The accumulator (106) is connected to the first suction pipe (5) and the second suction pipe (6). The accumulator (106) is a cylindrical sealed container. The accumulator (106) separates the inflowing refrigerant into a gas refrigerant and a liquid refrigerant.

### -Configuration of Compression Mechanism-

The compression mechanism (10) compresses the refrigerant sucked through the first suction pipe (5) and the second suction pipe (6), and discharges the compressed refrigerant to the internal space of the casing (2).

The compression mechanism (10) includes a first bearing (30), a first cylinder (11), an intermediate plate (34), a second cylinder (21), and a second bearing (35). In the compression mechanism (10), the first bearing (30), the first cylinder (11), the intermediate plate (34), the second cylinder (21), and the second bearing (35) are arranged in this order from the top to the bottom.

As illustrated in FIGS. 2 to 5, the compression mechanism (10) is a two-cylinder compression mechanism including a first cylinder (11) and a second cylinder (21). The compression mechanism (10) is a two-cylinder single-stage compression mechanism that compresses a low-pressure refrigerant in each of the first cylinder (11) and the second cylinder (21). A first roller (12), a first vane (13), and a pair of first bushings (14) are disposed in a space inside the first cylinder (11). A second roller (22), a second vane (23), and a pair of second bushings (24) are disposed in a space inside the second cylinder (21). The cylinders, the rollers, the vanes, and the pairs of bushings are merely examples, and the number of these components is not limited to two.

The compression mechanism (10) is directly or indirectly fixed to the barrel (2a) of the casing (2). In this embodiment, the first bearing (30) is directly fixed to the barrel (2a) of the casing (2) by welding. The first cylinder (11), the intermediate plate (34), the second cylinder (21), and the second bearing (35) are fixed to the first bearing (30) with bolts (not shown). The first bearing (30) may be indirectly welded to the barrel (2a) of the casing (2) with another member fixed to the first bearing (30).

### <Cylinder>

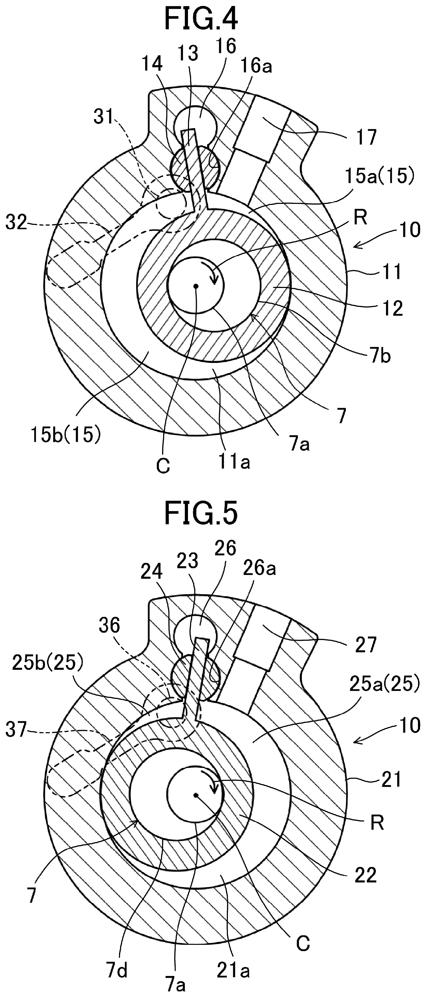

Each of the first cylinder (11) and the second cylinder (21) is an annular member. As illustrated in FIG. 4, the first cylinder (11) is formed with a first circular hole (11a), a first vane receiving hole (16), and a first suction port (17). As illustrated in FIG. 5, the second cylinder (21) is provided with a second circular hole (21a), a second vane receiving hole (26), and a second suction port (27).

The first circular hole (11a) is formed to penetrate the first cylinder (11) in the axial direction. The first circular hole (11a) is defined by an inner peripheral surface of the first cylinder (11). The first circular hole (11a) houses the first roller (12). The first cylinder chamber (15) is defined by the inner peripheral surface of the first cylinder (11), an outer peripheral surface of the first roller (12), a side surface of the first vane (13), the first bearing (30), and the intermediate plate (34).

The second circular hole (21a) is formed to penetrate the second cylinder (21) in the axial direction. The second circular hole (21a) is defined by an inner peripheral surface of the second cylinder (21). The second circular hole (21a) houses the second roller (22). The second cylinder chamber (25) is defined by the inner peripheral surface of the second cylinder (21), an outer peripheral surface of the second roller (22), a side surface of the second vane (23), the second bearing (35), and the intermediate plate (34).

The first vane receiving hole (16) extends outward from the first circular hole (11a) of the first cylinder (11) in the radial direction of the first cylinder (11). The first vane receiving hole (16) penetrates the first cylinder (11) in the axial direction. The first vane receiving hole (16) receives the first vane (13). The first vane receiving hole (16) includes a first bushing hole (16a) into which the pair of first bushings (14) fits.

The second vane receiving hole (26) extends outward from the second circular hole (21a) of the second cylinder (21) in the radial direction of the second cylinder (21). The second vane receiving hole (26) penetrates the second cylinder (21) in the axial direction. The second vane receiving hole (26) receives the second vane (23). The second vane receiving hole (26) includes a second bushing hole (26a) into which the pair of second bushings (24) fits.

The first suction port (17) is located near the first vane receiving hole (16). The first suction port (17) penetrates the first cylinder (11) in the radial direction. The first suction port (17) communicates with the first cylinder chamber (15). The first suction pipe (5) is connected to the first suction port (17). The second suction port (27) is located near the second vane receiving hole (26). The second suction port (27) penetrates the second cylinder (21) in the radial direction. The second suction port (27) communicates with the second cylinder chamber (25). The second suction pipe (6) is connected to the second suction port (27).

### <First Bearing>

As illustrated in FIG. 3, the first bearing (30) is disposed above the first cylinder (11). The first bearing (30) includes a tubular first boss portion (30a) and a first flange portion (30b) extending radially outward from the first boss portion (30a). The first boss portion (30a) and the first flange portion (30b) are integrally formed. The first bearing (30) constitutes a closing member that closes the first cylinder chamber (15) in the axial direction.

The first bearing (30) has an insertion hole penetrating the first boss portion (30a) in the axial direction. The main shaft portion (7a) is inserted into the insertion hole. An inner peripheral surface of the first bearing (30) defining the insertion hole constitutes a first sliding surface (30c) with which the drive shaft (7) is in contact.

As illustrated in FIG. 4, the first flange portion (30b) is provided with a first discharge port (31). The first discharge port (31) penetrates the first flange portion (30b) in the thickness direction. The first discharge port (31) is located across the first vane receiving hole (16) from the first suction port (17) when viewed in the axial direction.

The first flange portion (30b) is provided with a first discharge valve (32) that opens and closes the first discharge port (31). The first discharge valve (32) is a reed valve. The first discharge valve (32) periodically opens and closes in accordance with the pressure of a first compression chamber (15b) described later.

As illustrated in FIG. 3, the compression mechanism (10) is provided with a first muffler (33). A first muffler space (MS1) is formed between the first muffler (33) and the first bearing (30). The first muffler space (MS1) communicates with the first discharge port (31). The first muffler (33) has a first muffler opening (33a) that allows the first muffler space (MS1) and a space outside the first muffler (33) (primary space (S1) to communicate with each other.

### <Second Bearing>

The second bearing (35) is disposed below the second cylinder (21). The second bearing (35) includes a tubular second boss portion (35a) and a second flange portion (35b) extending radially outward from the second boss portion (35a). The second boss portion (35a) and the second flange portion (35b) are integrally formed. The second bearing (35) constitutes a closing member that closes the second cylinder chamber (25) in the axial direction.

The second bearing (35) has an insertion hole penetrating the second boss portion (35a) in the axial direction. The auxiliary shaft portion (7e) is inserted into the insertion hole. An inner peripheral surface of the second bearing (35) defining the insertion hole constitutes a second sliding surface (35c) with which the drive shaft (7) is in contact.

As illustrated in FIG. 5, the second flange portion (35b) is provided with a second discharge port (36). The second discharge port (36) penetrates the second flange portion (35b) in the thickness direction. The second discharge port (36) is located across the second vane receiving hole (26) from the second suction port (27) when viewed in the axial direction.

The second flange portion (35b) is provided with a second discharge valve (37) that opens and closes the second discharge port (36). The second discharge valve (37) is a reed valve. The second discharge valve (37) periodically opens and closes in accordance with the pressure of a second compression chamber (25b) described later.

As illustrated in FIG. 3, the compression mechanism (10) is provided with a second muffler (38). A second muffler space (MS2) is formed between the second muffler (38) and the second bearing (35). The second muffler space (MS2) communicates with the second discharge port (36). The second muffler space (MS2) communicates with the first muffler space (MS1) through an internal flow path formed in the compression mechanism (10).

### <Intermediate Plate>

The intermediate plate (34) is disposed between the first cylinder (11) and the second cylinder (21). The intermediate plate (34) covers other end (lower end) of the first cylinder chamber (15) and the other end (upper end) of the second cylinder chamber (25). The intermediate plate (34) constitutes a closing member that closes the first cylinder chamber (15) and the second cylinder chamber (25) in the axial direction.

A circular hole is formed in a central portion of the intermediate plate (34) to penetrate the intermediate plate (34) in the axial direction. The drive shaft (7) passes through the circular hole of the intermediate plate (34).

### <Roller>

Each of the first roller (12) and the second roller (22) is an annular member. The first eccentric portion (7b) of the drive shaft (7) is inserted in a space inside the first roller (12). The first roller (12) is driven by the drive shaft (7) to rotate eccentrically. An outer peripheral surface of the first roller (12) and an inner peripheral surface of the first cylinder (11) are in contact with each other. The second eccentric portion (7d) of the drive shaft (7) is inserted in a space inside the second roller (22). The second roller (22) is driven by the drive shaft (7) to rotate eccentrically. An outer peripheral surface of the second roller (22) and an inner peripheral surface of the second cylinder (21) are in contact with each other.

When the rollers (12, 22) rotate eccentrically, the rotational angle of each roller (12, 22) changes. The rotational angle of the roller (12, 22) closest to the vane receiving hole (16, 26) as viewed in the axial direction is defined as a reference angle (rotational angle = 0°).

### <Vane>

As illustrated in FIGS. 4 and 5, the first vane (13) and the second vane (23) are plate-shaped members. The first vane (13) is integrally formed with the first roller (12). The first vane (13) extends outward from the outer peripheral surface of the first roller (12) in the radial direction of the first cylinder (11). The second vane (23) is integrally formed with the second roller (22). The second vane (23) extends outward from the outer peripheral surface of the second roller (22) in the radial direction of the second cylinder (21).

The first vane (13) fits in the first vane receiving hole (16) of the first cylinder (11). The first vane (13) partitions the first cylinder chamber (15) into a first compression chamber (15b) and a first suction chamber (15a). When viewed in the axial direction, the first suction chamber (15a) is formed near the first suction port (17), and the first compression chamber (15b) is formed near the first discharge port (31).

The second vane (23) fits in the second vane receiving hole (26) of the second cylinder (21). The second vane (23) partitions the second cylinder chamber (25) into a second suction chamber (25a) and a second compression chamber (25b). When viewed in the axial direction, the second suction chamber (25a) is formed near the second suction port (27), and the second compression chamber (25b) is formed near the second discharge port (36).

### <Bushing>

The pair of first bushings (14) and the pair of second bushings (24) are substantially semi-cylindrical members. Flat surfaces of the pair of first bushings (14) face each other. Flat surfaces of the pair of second bushings (24) face each other.

The pair of first bushings (14) fits into the first bushing hole (16a), with the first vane (13) sandwiched between them. The first vane (13) swings back and forth together with the first bushings (14). At the same time, the first vane (13) reciprocates along the flat surfaces of the pair of first bushings (14).

The pair of second bushings (24) fits into the second bushing hole (26a), with the second vane (23) sandwiched between them. The second vane (23) swings back and forth together with the second bushings (24). At the same time, the second vane (23) reciprocates along the flat surfaces of the pair of second bushings (24).

### -Operation of Compressor-

When the motor (3) is energized, the drive shaft (7) is driven by the motor (3). The drive shaft (7) rotates in the direction indicated by an arrow R shown in FIGS. 4 and 5. When the drive shaft (7) rotates, the first roller (12) eccentrically rotates along the inner peripheral surface of the first cylinder (11), and at the same time, the second roller (22) eccentrically rotates along the inner peripheral surface of the second cylinder (21).

The gas refrigerant that has passed through the first suction pipe (5) is sucked into the first suction chamber (15a) through the first suction port (17). When the first roller (12) rotates eccentrically and the first suction chamber (15a) is blocked from the first suction port (17), the first compression chamber (15b) is formed. The first roller (12) further rotates eccentrically to compress the refrigerant in the first compression chamber (15b).

The gas refrigerant that has passed through the second suction pipe (6) is sucked into the second suction chamber (25a) through the second suction port (27). When the second roller (22) rotates eccentrically and the second suction chamber (25a) is blocked from the second suction port (27), the second compression chamber (25b) is formed. The second roller (22) further rotates eccentrically to compress the refrigerant in the second compression chamber (25b).

The refrigerant compressed in the first compression chamber (15b) is discharged from the first compression chamber (15b) to the first muffler space (MS1) through the first discharge port (31). The refrigerant compressed in the second compression chamber (25b) is discharged from the second compression chamber (25b) to the second muffler space (MS2) through the second discharge port (36). The refrigerant in the second muffler space (MS2) flows into the first muffler space (MS1) through the internal flow path. The refrigerant in the first muffler space (MS1) flows into the primary space (S1), passes through the motor (3), and then enters the secondary space (S2). The refrigerant in the secondary space (S2) is discharged outside the casing (2) through the discharge pipe (4).

### -Injection Pipe-

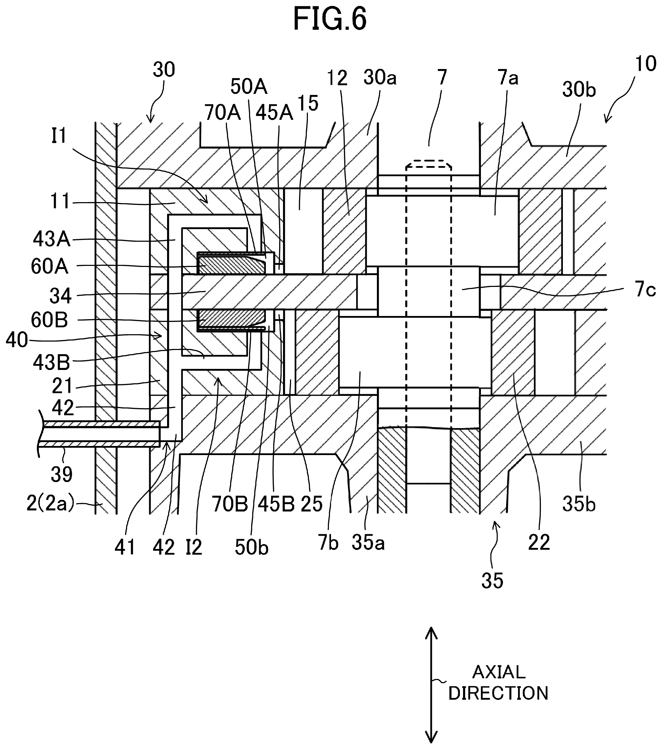

As illustrated in FIG. 6, the compressor (1) includes an injection pipe (39). The injection pipe (39) is attached to the lower portion of the barrel (2a). The injection pipe (39) penetrates the barrel (2a) in the radial direction. An outlet end of the injection pipe (39) is connected to the compression mechanism (10). The injection pipe (39) of this example is connected to the second flange portion (35b) of the second bearing (35). The intermediate flow path (108) of the refrigerant circuit (101) shown in FIG. 1 is connected to an inlet end of the injection pipe (39). The outlet end of the injection pipe (39) is connected to an injection flow path (41) formed in the compression mechanism (10).

### -Injection Mechanism-

As illustrated in FIG. 6, the compressor (1) includes an injection mechanism (40) for introducing an intermediate-pressure refrigerant into the compression chambers (15b, 25b). Carbon dioxide as the refrigerant fills the refrigerant circuit (101). In the refrigerant circuit (101), a refrigeration cycle (so-called supercritical cycle) where the high pressure is equal to or higher than the critical pressure is performed. The intermediate pressure corresponds to a pressure between the low pressure and high pressure of the refrigerant circuit (101). In other words, the intermediate pressure corresponds to a pressure between the suction pressure and discharge pressure of the compressor (1). The intermediate-pressure refrigerant is a gas-liquid two-phase refrigerant. The intermediate-pressure refrigerant may be a liquid refrigerant or a gas refrigerant. The injection mechanism (40) is provided in the compression mechanism (10).

The injection mechanism (40) of the present embodiment includes a first injection element (I1) and a second injection element (I2). The first injection element (I1) introduces the intermediate-pressure refrigerant into the first compression chamber (15b) of the first cylinder chamber (15). The second injection element (I2) introduces the intermediate-pressure refrigerant into the second compression chamber (25b) of the second cylinder chamber (25). The first injection element (I1) includes a first valve chamber (50A), a first reed valve (70A), a first valve retainer (60A), a first branch flow path (43A), and a first introduction passage (45A). The second injection element (I2) includes a second valve chamber (50B), a second reed valve (70B), a second valve retainer (60B), a second branch flow path (43B), and a second introduction passage (45B).

### <Injection Flow Path>

The injection flow path (41) is a flow path for sending the intermediate-pressure refrigerant in the injection pipe (39) to the compression chambers (15b, 25b). As illustrated in FIG. 6, the injection flow path (41) of the present embodiment branches into two paths and communicates with both the first compression chamber (15b) and the second compression chamber (25b). The injection flow path (41) includes a main flow path (42), the first branch flow path (43A), the second branch flow path (43B), the first valve chamber (50A), the second valve chamber (50B), the first introduction passage (45A), and the second introduction passage (45B). An inlet end of the main flow path (42) is connected to the injection pipe (39). The first branch flow path (43A) allows the main flow path (42) and the first valve chamber (50A) to communicate with each other. The second branch flow path (43B) allows the main flow path (42) and the second valve chamber (50B) to communicate with each other. The first introduction passage (45A) allows the first valve chamber (50A) and the first compression chamber (15b) to communicate with each other. The second introduction passage (45B) allows the second valve chamber (50B) and the second compression chamber (25b) to communicate with each other. In the present embodiment, the main flow path (42), the first branch flow path (43A), and the second branch flow path (43B) constitute a first flow path, and the first introduction passage (45A) and the second introduction passage (45B) constitute a second flow path.

The main flow path (42) is formed in the second bearing (35). The main flow path (42) extends from the injection pipe (39) toward the drive shaft (7), and further extends in the axial direction through the second bearing (35) and the second cylinder (21). The first branch flow path (43A) extends in the axial direction from the outlet end of the main flow path (42) through the second cylinder (21), the intermediate plate (34), and the first cylinder (11). Further, the first branch flow path (43A) extends toward the drive shaft (7) in the first cylinder (11), and then extends in the axial direction to the first valve chamber (50A). The second branch flow path (43B) extends from the outlet end of the main flow path (42) toward the drive shaft (7) in the second cylinder (21), and then extends in the axial direction to the second valve chamber (50B).

The first valve chamber (50A) is formed in the first cylinder (11). Specifically, the first valve chamber (50A) is formed in a recess-shaped groove formed in an end face facing the intermediate plate (34) (lower end face) in the axial direction. The first valve chamber (50A) houses the first valve retainer (60A) and the first reed valve (70A). The second valve chamber (50B) is formed in the second cylinder (21). Specifically, the second valve chamber (50B) is formed in a recess-shaped groove formed in an end face facing the intermediate plate (34) (upper end face) in the axial direction. The second valve chamber (50B) houses the second valve retainer (60B) and the second reed valve (70B).

The first introduction passage (45A) extends from the first valve chamber (50A) toward the inner peripheral surface of the first cylinder (11). An outlet end of the first introduction passage (45A) opens toward the first cylinder chamber (15). The second introduction passage (45B) extends from the second valve chamber (50B) toward the inner peripheral surface of the second cylinder (21). An outlet end of the second introduction passage (45B) opens toward the second cylinder chamber (25).

### -Details of Injection Elements-

Details of the injection elements (I1, I2) will be described with reference to FIGS. 6 to 11. The first injection element (I1) and the second injection element (I2) have the same basic configuration. Thus, in the following description, the first valve chamber (50A) and the second valve chamber (50B) may be collectively referred to as a valve chamber (50), the first valve retainer (60A) and the second valve retainer (60B) may be collectively referred to as a valve retainer (60), the first reed valve (70A) and the second reed valve (70B) may be collectively referred to as a reed valve (70), the first branch flow path (43A) and the second branch flow path (43B) may be collectively referred to as a branch flow path (43), and the first introduction passage (45A) and the second introduction passage (45B) may be referred to as an introduction passage (45).

In the following description, a first direction is the longitudinal direction of the reed valve (70), a second direction is the thickness direction of the reed valve (70), and a third direction is a width direction of the reed valve (70) orthogonal to the first and second directions. The first direction corresponds to the longitudinal direction of the valve retainer (60). The second direction corresponds to the thickness direction of the valve retainer (60). The third direction corresponds to the width direction of the valve retainer (60). One end in the first direction corresponds to the movable side of the reed valve (70) (a tip portion (72)). The other end in the first direction corresponds to the fixed side of the reed valve (70) (a base portion (71)). One end in the second direction corresponds to the bottom surface (51) side of the reed valve (70) in the second direction. The other end in the second direction corresponds to the valve retainer (60) side of the reed valve (70) in the second direction.

### <Valve Chamber>

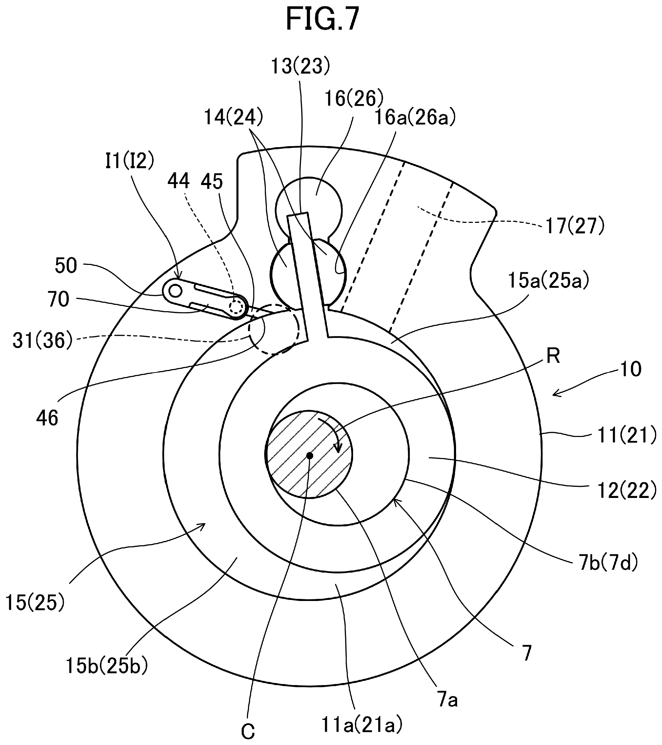

The valve chamber (50) is formed in the cylinder (11, 21). As illustrated in FIG. 7, the valve chamber (50) is disposed across the vane receiving hole (16, 26) from the suction port (17, 27) when viewed in the axial direction. The valve chamber (50) is disposed near the discharge port (31, 36). The valve chamber (50) houses the valve retainer (60) and the reed valve (70). The valve chamber (50) extends in the first direction toward the cylinder chamber (15, 25). As illustrated in FIGS. 7 to 9, the valve chamber (50) of the present embodiment is formed in an oval shape as viewed in the second direction. The valve chamber (50) of the present embodiment is defined by an inner surface forming the recess-shaped groove and the intermediate plate (34) closing the opening of the recess-shaped groove. The inner surface forming the valve chamber (50) includes a bottom surface (51) which is a third surface and a closing surface (52) which is a second surface. The bottom surface (51) is a surface at the bottom of the recess-shaped groove. The bottom surface (51) faces the valve retainer (60) in the second direction across the reed valve (70). The bottom surface (51) has an outflow port (44) facing the valve chamber (50). The closing surface (52) is a surface of the intermediate plate (34) facing the inside of the recess-shaped groove, and faces the bottom surface (51) in the second direction.

The inner surface forming the valve chamber (50) includes a peripheral surface extending between the bottom surface (51) and the closing surface (52). In the present embodiment, the peripheral surface of the valve chamber (50) is formed in an oval shape with the first direction as the longitudinal direction when viewed in the second direction. The peripheral surface includes a first inner side surface (53), a second inner side surface (54), a first inner end surface (55), and a second inner end surface (56). The first inner side surface (53) and the second inner side surface (54) face each other in the third direction. The first inner side surface (53) and the second inner side surface (54) are flat surfaces extending in the first direction. In other words, the first inner side surface (53) and the second inner side surface (54) extend linearly and are parallel to each other when viewed in the second direction. The first inner end surface (55) is formed at the other end of the valve chamber (50) in the first direction. The second inner end surface (56) is formed at one end of the valve chamber (50) in the first direction. Each of the first inner end surface (55) and the second inner end surface (56) is formed in an arc shape that is convex outward as viewed in the second direction.

Each of the first inner side surface (53) and the second inner side surface (54) is entirely smooth and continuous as viewed in the second direction. The phrase "smooth and continuous" means that the surface is continuous with no steps or is tangentially continuous. In the present embodiment, the inner peripheral surface of the valve chamber (50) is entirely smooth and continuous.

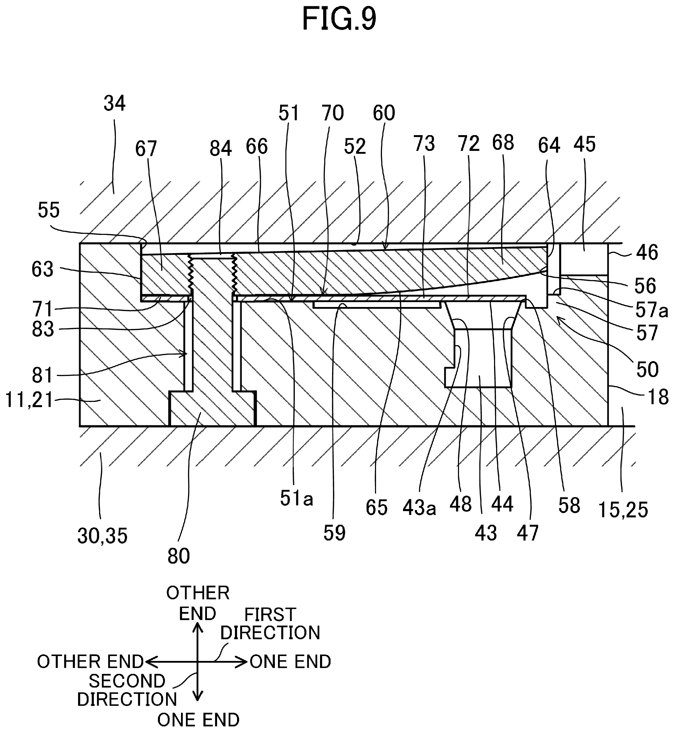

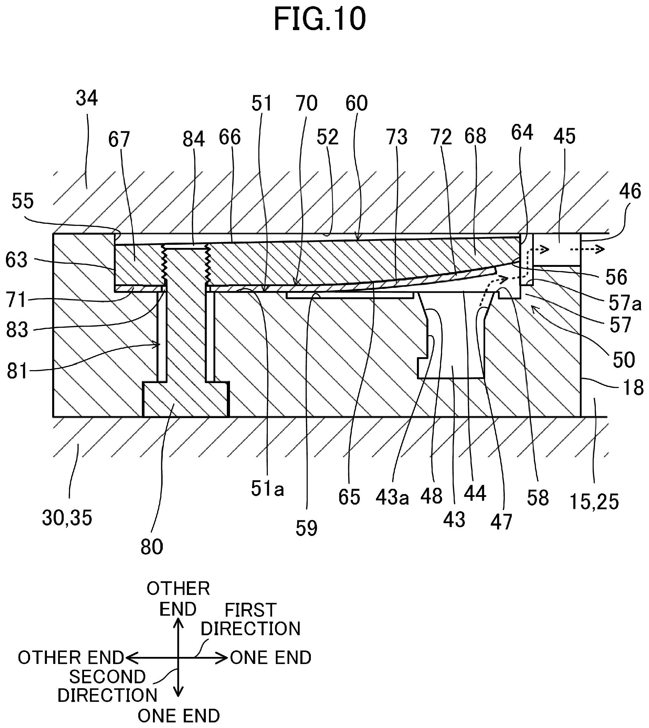

The bottom surface (51) of the valve chamber (50) has a support surface (51a), a valve seat surface (58), and a recessed groove (59). As illustrated in FIGS. 9 and 10, the support surface (51a) is located closer to the other end of the valve chamber (50) in the first direction. The support surface (51a) supports a base portion (71) of the reed valve (70). The valve seat surface (58) is located closer to the one end of the valve chamber (50) in the first direction. The valve seat surface (58) is formed around an outflow port (44) of the branch flow path (43). The outflow port (44) is formed in a circular shape as viewed in the second direction. The valve seat surface (58) is formed in an annular shape surrounding the outflow port (44) as viewed in the second direction. The support surface (51a) and the valve seat surface (58) are formed on the same plane. The recessed groove (59) extends from a middle portion to the one end of the valve chamber (50) in the first direction. The recessed groove (59) is formed in the bottom surface (51) to leave the support surface (51a) and the valve seat surface (58). The support surface (51a) and the valve seat surface (58) are closer to the closing surface (52) than the bottom surface of the recessed groove (59).

As illustrated in FIGS. 9 and 10, a step (57) which is a protrusion is formed at one end of the bottom surface (51) in the first direction. The step (57) protrudes from the bottom surface of the recessed groove (59) toward the closing surface (52) in the second direction. A raised surface (57a) at the other end in the second direction of the step (57) (a surface facing the closing surface (52)) is closer to the closing surface (52) than the support surface (51a) and the valve seat surface (58). The raised surface (57a) is fan-shaped or crescent-shaped when viewed in the second direction.

### <Valve Retainer>

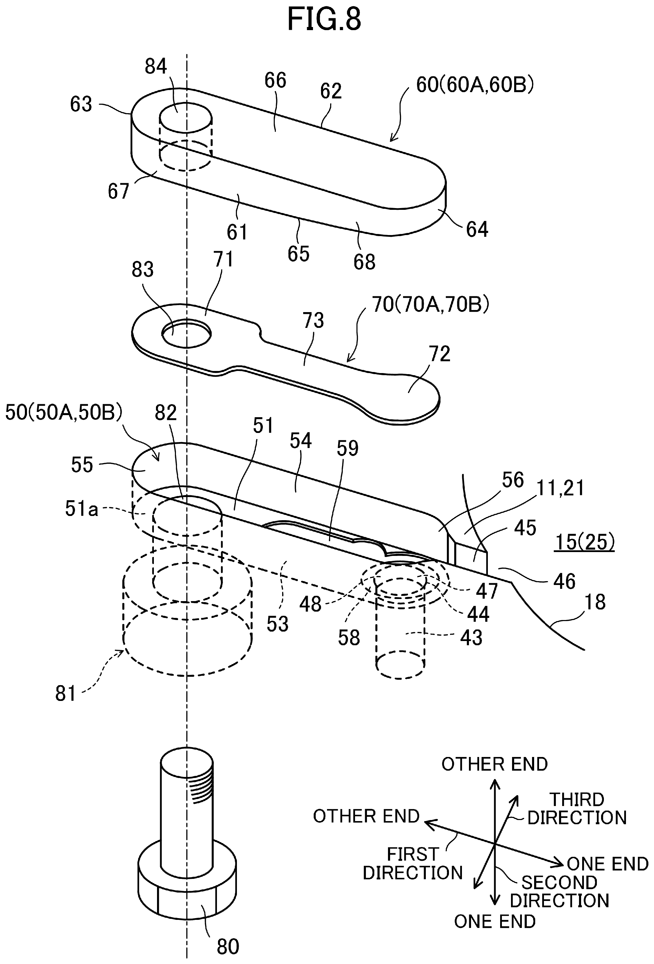

The valve retainer (60) shown in FIGS. 8 to 10 is disposed in the valve chamber (50) and extends in the first direction. The valve retainer (60) regulates the operation of the reed valve (70). The valve retainer (60) fits in the valve chamber (50) as viewed in the second direction. The term "fit" as used herein means that the valve retainer (60) fits into the valve chamber (50) substantially without any gap or with a slight gap. The "gap" as used herein is equal to or less than 1 mm, and preferably equal to or less than 0.1 mm.

The valve retainer (60) is formed in a shape similar to the inner surface of the valve chamber (50) as viewed in the second direction. The valve retainer (60) is formed in an oval shape extending in the first direction as viewed in the second direction. The valve retainer (60) includes a first side surface (61), a second side surface (62), a first end surface (63), and a second end surface (64). The first side surface (61) is a flat surface parallel to the first inner side surface (53). The second side surface (62) is a flat surface parallel to the second inner side surface (54). The first end surface (63) is curved along the first inner end surface (55). The second end surface (64) is curved along the second inner end surface (56).

Each of the first side surface (61) and the second side surface (62) is entirely smooth and continuous as viewed in the second direction. In the present embodiment, the outer peripheral surface of the valve retainer (60) is entirely smooth and continuous.

The valve retainer (60) has a valve facing surface (65) facing the reed valve (70) in the second direction. The valve retainer (60) has a back surface (66) facing opposite to the reed valve (70) in the second direction.

The valve retainer (60) includes a fixing portion (67) and a contact portion (68). The fixing portion (67) is formed at the other end of the valve retainer (60) in the first direction. The contact portion (68) extends from a middle portion to the one end of the valve retainer (60) in the first direction. The fixing portion (67) overlaps the base portion (71) of the reed valve (70) and the support surface (51a) as viewed in the second direction. The contact portion (68) extends in the first direction over the tip portion (72) and a movable portion (73) of the reed valve (70).

The valve retainer (60) is formed into a boat shape in a cross-sectional view perpendicular to the third direction. The contact portion (68) of the valve retainer (60) has a thickness in the second direction gradually increasing from the one end to the other end in the first direction. The thickness of the fixing portion (67) of the valve retainer (60) in the second direction is substantially uniform. The fixing portion (67) has a greater thickness in the second direction than the contact portion (68).

### <Reed Valve>

The reed valve (70) shown in FIGS. 7 to 11 is disposed between the valve retainer (60) and the bottom surface (51) of the valve chamber (50). The reed valve (70) is formed in a plate shape having a thickness in the second direction. The reed valve (70) is made of an elastic metal material. The reed valve (70) extends in the first direction along the valve retainer (60). The reed valve (70) includes the base portion (71) at the other end in the first direction, the tip portion (72) at the one end in the first direction, and the movable portion (73) connecting the base portion (71) and the tip portion (72).

The base portion (71) is sandwiched between the support surface (51a) and the fixing portion (67) of the valve retainer (60). In other words, the base portion (71) is fixed in the valve chamber (50). Both side surfaces of the base portion (71) in the third direction and an end surface of the base portion (71) at the other end in the first direction fit with the valve chamber (50) as viewed in the second direction. The base portion (71) is sandwiched between the valve facing surface (65) of the fixing portion (67) of the valve retainer (60) and the support surface (51a).

The tip portion (72) constitutes a valve body of the reed valve (70). The tip portion (72) overlaps the valve seat surface (58) as viewed in the second direction. The tip portion (72) is formed in a circular shape having a larger diameter than the outflow port (44) when viewed in the second direction. The tip portion (72) has a narrower width in the third direction than the base portion (71). The tip portion (72) has a shorter length in the first direction than the base portion (71).

The movable portion (73) extends in the first direction from the base portion (71) to the tip portion (72). The movable portion (73) has a narrower width in the third direction than the base portion (71) and the tip portion (72). The movable portion (73) is movable toward the valve retainer (60) together with the tip portion (72). The movable portion (73) changes its angle between the bottom surface (51) forming the valve chamber (50) and the valve facing surface (65) of the valve retainer (60) using its end toward the base portion (71) as a fulcrum. The movable portion (73) overlaps the recessed groove (59) as viewed in the second direction. The recessed groove (59) surrounds the entire movable portion (73) as viewed in the second direction.

The reed valve (70) opens and closes the outflow port (44). The shape of the reed valve (70) differs between a closed state shown in FIG. 9 and an open state shown in FIG. 10. When the reed valve (70) is closed, the tip portion (72) is in contact with the valve seat surface (58). In this state, an outer edge of the tip portion (72) overlaps with the recessed groove (59) as viewed in the second direction. Then, the outflow port (44) is closed by the tip portion (72). When the reed valve (70) is open, the movable portion (73) and the tip portion (72) are in contact with the contact portion (68) of the valve retainer (60). Then, the outflow port (44) opens, and the outflow port (44) and the introduction passage (45) communicate with each other via the valve chamber (50).

### <Structure Related to Fastening Member>

The injection mechanism (40) includes a fastening member (80) for fastening the valve retainer (60) and the reed valve (70) to the cylinder (11, 21). The fastening member (80) of the present embodiment is a bolt.

The fastening member (80) includes a head and a shaft. The head is located at one end of the shaft in the second direction. The axis of the head and the axis of the shaft substantially coincide with each other. A threaded portion is formed on a peripheral surface of a tip portion (other end portion in the second direction) of the shaft.

The cylinder (11, 21) has a receiving hole (81) through which the fastening member (80) is inserted. The receiving hole (81) extends in the second direction from an end surface of the cylinder (11, 21) facing the intermediate plate (34) toward the valve chamber (50). The bottom surface (51) has a bottom surface hole (82) which is an opening at the tip of the receiving hole (81). A valve hole (83) is formed in the base portion (71) of the reed valve (70). A fastening hole (84) is formed in the fixing portion (67) of the valve retainer (60). The fastening hole (84) penetrates the valve retainer (60) in the second direction. A thread groove corresponding to the threaded portion is formed on an inner peripheral surface of the fastening hole (84).

The receiving hole (81), the bottom surface hole (82), the valve hole (83), and the fastening hole (84) overlap each other as viewed in the second direction. Each of the receiving hole (81), the bottom surface hole (82), the valve hole (83), and the fastening hole (84) is formed in a substantially circular shape as viewed in the second direction. The receiving hole (81), the bottom surface hole (82), the valve hole (83), and the fastening hole (84) have coaxial axes.

When the threaded portion of the fastening member (80) is engaged with the thread groove, the valve retainer (60) is fixed to the cylinder (11, 21). Further, the reed valve (70) is fixed between the fixing portion (67) of the valve retainer (60) and the support surface (51a).

### <Introduction Passage>

The introduction passage (45) extends from the valve chamber (50) toward the inner peripheral surface (18) of the cylinder (11, 21). The introduction passage (45) extends in a direction orthogonal to the axial direction of the drive shaft (7). The introduction passage (45) of the present embodiment extends in the first direction. The introduction passage (45) has a rectangular cross section orthogonal to the longitudinal direction. The introduction passage (45) is in contact with the intermediate plate (34) at the other end in the second direction. The introduction passage (45) has an opening (46) for discharging the intermediate-pressure refrigerant into the cylinder chamber (15, 25).

### -Operation of Injection Mechanism-

The operation of the injection mechanism (40) will be described. As illustrated in FIG. 7, when the compression chamber (15b, 25b) has a relatively large volume and an internal pressure of the compression chamber (15b, 25b) is lower than the intermediate pressure, the pressure of the valve chamber (50) communicating with the compression chamber (15b, 25b) falls below the intermediate pressure. In this case, as illustrated in FIG. 10, the reed valve (70) opens, and the outflow port (44) opens. As a result, the intermediate-pressure refrigerant in the injection pipe (39) is supplied to the compression chamber (15b, 25b) through the injection flow path (41). Specifically, when the first reed valve (70A) opens, the refrigerant in the injection pipe (39) flows through the main flow path (42), the first branch flow path (43A), the first valve chamber (50A), and the first introduction passage (45A) in this order, and is supplied to the first compression chamber (15b). When the second reed valve (70B) opens, the refrigerant in the injection pipe (39) flows through the main flow path (42), the second branch flow path (43B), the second valve chamber (50B), and the second introduction passage (45B) in this order, and is supplied to the second compression chamber (25b).

Thereafter, when the volume of the compression chamber (15b, 25b) decreases with the eccentric rotation of the roller (12, 22) and the internal pressure of the compression chamber (15b, 25b) exceeds the intermediate pressure, the pressure of the valve chamber (50) communicating with the compression chamber (15b, 25b) exceeds the intermediate pressure. In this case, as illustrated in FIG. 9, the reed valve (70) is closed, and the outflow port (44) is closed. As a result, the intermediate-pressure refrigerant in the injection pipe (39) is not supplied to the compression chamber (15b, 25b). Specifically, when the first reed valve (70A) is closed, the outflow port (44) of the first branch flow path (43A) is blocked by the tip portion (72) of the first reed valve (70A). When the second reed valve (70B) is closed, the outflow port (44) of the second branch flow path (43B) is blocked by the tip portion (72) of the second reed valve (70B).

In this manner, when the compressor (1) is operating, an operation of the supply of the intermediate-pressure refrigerant to the first compression chamber (15b) and an operation of stopping the supply of the intermediate-pressure refrigerant to the first compression chamber (15b) are alternately performed in the first injection element (I1). At the same time, an operation of the supply of the intermediate-pressure refrigerant to the second compression chamber (25b) and an operation of stopping the supply of the intermediate-pressure refrigerant to the second compression chamber (25b) are alternately performed in the second injection element (I2).

### <Detailed Configuration of Branch Flow Path>

As illustrated in FIGS. 9 to 12, in a cross section passing through a center line (L) of the reed valve (70) extending in the first direction and including the second direction (hereinafter this cross section will be referred to as a first cross section), an inner surface forming the branch flow path (43) includes a straight portion (43a), a first inclined surface (47), and a second inclined surface (48).

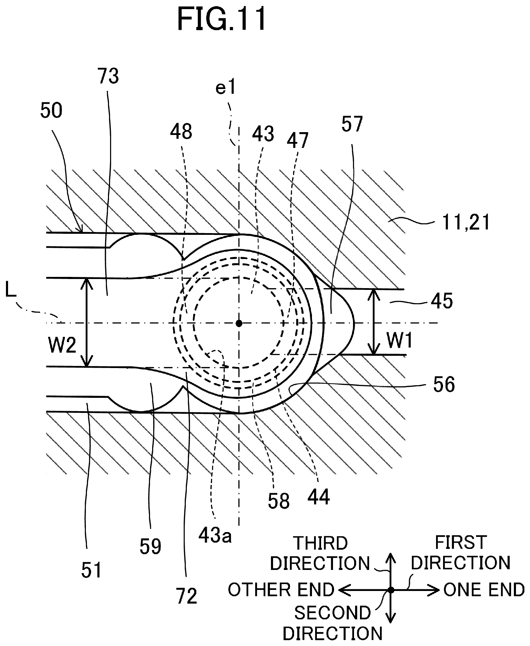

The straight portion (43a) is a portion extending straight in the second direction. The straight portion (43a) is located upstream of the first inclined surface (47) and the second inclined surface (48). As illustrated in FIG. 11, the diameter of the branch flow path (43) at the straight portion (43a) is smaller than the diameter of the outflow port (44).

As illustrated in FIG. 11, the first inclined surface (47) and the second inclined surface (48) are continuously connected. The first inclined surface (47) and the second inclined surface (48) are formed as a single tapered surface. The first inclined surface (47) is located on one end side in the first direction relative to a first line (e1) when viewed in the second direction, and the second inclined surface (48) is located on the other end side in the first direction relative to the first line (e1) when viewed in the second direction. The first inclined surface (47) and the second inclined surface (48) do not include a portion of the tapered surface on the first line (e1). The first line (e1) is a straight line passing through the center of the straight portion (43a) and extending in the third direction as viewed in the second direction. The first line (e1) is orthogonal to the center line (L).

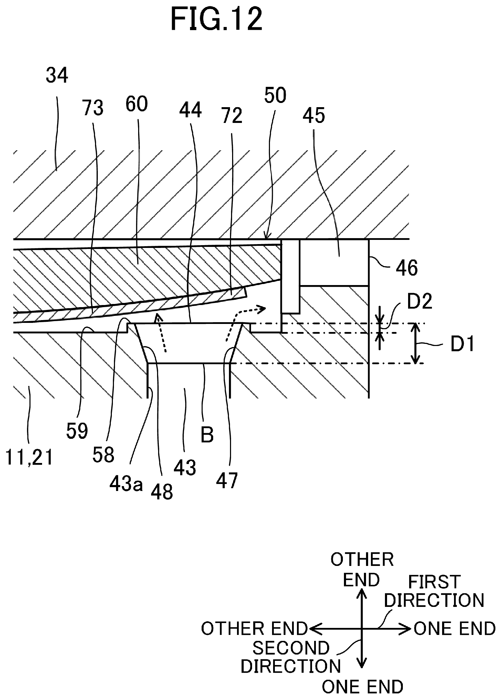

As illustrated in FIG. 12, the first inclined surface (47) is located at the end of the branch flow path (43) facing the valve chamber (50). The first inclined surface (47) is continuous with the straight portion (43a) and the valve seat surface (58). The first inclined surface (47) is inclined toward the one end in the first direction with respect to the second direction to approach the introduction passage (45) as the first inclined surface (47) extends toward the valve seat surface (58). In the second direction, a distance (D1) between the valve seat surface (58) and a boundary (B) between the first inclined surface (47) and the straight portion (43a) is longer than a distance (D2) between the valve seat surface (58) and the bottom surface of the recessed groove (59).

The first inclined surface (47) is located on a center line of the introduction passage (45) extending in the first direction as viewed in the second direction. The center line of the introduction passage (45) extending in the first direction is the same as the center line (L) of the reed valve (70) extending in the first direction. The center of the first inclined surface (47) in the third direction is the same as the center of the introduction passage (45) in the third direction. The width of the first inclined surface (47) in the third direction is greater than the width (W1) of the introduction passage (45) in the third direction.

The second inclined surface (48) is located at the end of the branch flow path (43) facing the valve chamber (50). The second inclined surface (48) is continuous with the straight portion (43a) and the valve seat surface (58). The second inclined surface (48) is inclined toward the other end in the first direction with respect to the second direction to be separated from the introduction passage (45) as the second inclined surface (48) extends toward the valve seat surface (58). In the second direction, the boundary (B) between the second inclined surface (48) and the straight portion (43a) is at the same position as the boundary (B) between the first inclined surface (47) and the straight portion (43a). Thus, the distance (D1) between the valve seat surface (58) and the boundary (B) between the second inclined surface (48) and the straight portion (43a) is longer than the distance (D2) between the valve seat surface (58) and the bottom surface of the recessed groove (59). In the first cross section, an acute angle of the second inclined surface (48) with respect to the second direction (inclination angle) is the same as the inclination angle of the first inclined surface (47) with respect to the second direction.

The second inclined surface (48) is located on the center line (L) of the reed valve (70) extending in the first direction as viewed in the second direction. The center of the second inclined surface (48) in the third direction is the same as the center of the movable portion (73) in the third direction. The width of the second inclined surface (48) in the third direction is greater than the width (W2) of the movable portion (73) in the third direction.

Part of the intermediate-pressure refrigerant flowing through the straight portion (43a) flows along the first inclined surface (47) toward the introduction passage (45). This reduces sudden changes in angle of the refrigerant flowing from the straight portion (43a) to the introduction passage (45) in the valve chamber (50), and the flow resistance of the refrigerant flowing from the branch flow path (43) to the introduction passage (45) decreases. Thus, the intermediate-pressure refrigerant smoothly flows from the branch flow path (43) to the cylinder chamber (15, 25). This can increase the flow rate of the intermediate-pressure refrigerant to the cylinder chamber (15, 25).

In addition, part of the intermediate-pressure refrigerant flowing through the straight portion (43a) flows toward the movable portion (73) of the reed valve (70) along the second inclined surface (48). The intermediate-pressure refrigerant is blown to the movable portion (73), pushing the reed valve (70) up. Thus, the contact between the reed valve (70) and the contact portion (68) of the valve retainer (60) can be easily maintained. This can easily keep the reed valve (70) fully open, increasing the flow rate of the intermediate-pressure refrigerant to the cylinder chamber (15, 25).

### -Advantages of Embodiments-

In the present embodiment, in the cross section passing through the center line (L) of the reed valve (70) extending in the first direction and including the second direction, the inner surface forming the branch flow path (43) includes the first inclined surface (47) that is continuous with the valve seat surface (58) and inclined toward the one end in the first direction with respect to the second direction to approach the introduction passage (45) as the first inclined surface (47) extends toward the valve seat surface (58) decreases. The intermediate-pressure refrigerant flowing through the branch flow path (43) flows along the first inclined surface (47) toward the introduction passage (45). This reduces sudden changes in angle of the refrigerant flowing from the straight portion (43a) to the introduction passage (45) in the valve chamber (50), and the flow resistance of the refrigerant flowing from the branch flow path (43) to the introduction passage (45) decreases. Thus, the intermediate-pressure refrigerant smoothly flows from the branch flow path (43) to the cylinder chamber (15, 25). As a result, the compressor (1) can increase the flow rate of intermediate-pressure refrigerant flowing into the cylinder chamber (15, 25) by the injection mechanism (40).

In the present embodiment, the first inclined surface (47) is located at a portion of the inner surface forming the branch flow path (43) at the one end in the first direction. This configuration allows the intermediate-pressure refrigerant to smoothly flow toward the introduction passage (45) while increasing the flow path area of the branch flow path (43). Thus, the compressor (1) can increase the flow rate of intermediate-pressure refrigerant flowing into the cylinder chamber (15, 25) by the injection mechanism (40).

In the present embodiment, the first inclined surface (47) is located on the center line of the introduction passage (45) extending in the first direction as viewed in the second direction. Thus, the intermediate-pressure refrigerant flowing along the first inclined surface (47) smoothly flows toward the introduction passage (45). Thus, the compressor (1) can increase the flow rate of intermediate-pressure refrigerant flowing into the cylinder chamber (15, 25) by the injection mechanism (40).

In the present embodiment, in particular, the width of the first inclined surface (47) in the third direction is greater than the width of the introduction passage (45) in the third direction. This increases the amount of refrigerant flowing toward the introduction passage (45) along the first inclined surface (47). Thus, the compressor (1) can increase the flow rate of intermediate-pressure refrigerant flowing into the cylinder chamber (15, 25) by the injection mechanism (40).

In the present embodiment, the contact portion (68) of the valve retainer (60) gradually increases in thickness in the second direction from the one end to the other end in the first direction. The reed valve (70) includes the base portion (71) formed at the other end of the reed valve (70) in the first direction and fixed to the valve retainer (60), the tip portion (72) formed at one end of the reed valve (70) in the first direction and configured to open and close the outflow port (44), and the movable portion (73) connecting the base portion (71) and the tip portion (72) and movable toward the valve retainer (60) together with the tip portion (72). With the provision of the first inclined surface (47), the one end of the outflow port (44) in the first direction is located closer to the one end of the contact portion (68) in the first direction than when the first inclined surface (47) is not formed. Thus, the distance in the second direction between the one end of the outflow port (44) in the first direction and the contact portion (68) is longer than when the first inclined surface (47) is not formed. If the reed valve (70) has the above-described configuration, the maximum distance in the second direction between the tip portion (72) of the reed valve (70) in the open state and the outflow port (44) is longer than when the first inclined surface (47) is not formed. This makes it easier for the intermediate-pressure refrigerant to flow out, and thus the compressor (1) can increase the flow rate of the intermediate-pressure refrigerant flowing into the cylinder chamber (15,25) by the injection mechanism (40).

In the present embodiment, in the cross section passing through the center line (L) of the reed valve (70) extending in the first direction and including the second direction, the inner surface forming the branch flow path (43) includes the second inclined surface (48) that is located at the other end in the first direction, continuous with the valve seat surface (58), and inclined toward the other end in the first direction with respect to the second direction to be separated from the second flow path (45) as the second inclined surface (48) extends toward the valve seat surface (58). Part of the intermediate-pressure refrigerant flows toward the other end in the first direction along the second inclined surface (48). Thus, the intermediate-pressure refrigerant is blown to the reed valve (70), pushing the reed valve (70) up. With the reed valve (70) pushed up, the contact between the reed valve (70) and the contact portion (68) of the valve retainer (60) is easily maintained. This can easily keep the reed valve (70) fully open, and the compressor (1) can increase the flow rate of the intermediate-pressure refrigerant flowing into the cylinder chamber (15, 25) by the injection mechanism (40).

In particular, in the present embodiment, as described above, the reed valve (70) includes the base portion (71), the tip portion (72), and the movable portion (73) that connects the base portion (71) and the tip portion (72) and is movable toward the valve retainer (60) together with the tip portion (72). The refrigerant flowing along the second inclined surface (48) flows toward the base portion (71) of the reed valve (70). Thus, the intermediate-pressure refrigerant pushes the movable portion (73) up relative to the base portion (71), making it easier to keep the reed valve (70) fully open. As a result, the compressor (1) can increase the flow rate of intermediate-pressure refrigerant flowing into the cylinder chamber (15, 25) by the injection mechanism (40).

In the present embodiment, the second inclined surface (48) is located on the center line (L) of the reed valve (70) extending in the first direction as viewed in the second direction. Thus, the intermediate-pressure refrigerant flowing along the second inclined surface (48) is likely to interfere with the reed valve (70). This allows the intermediate-pressure refrigerant to easily keep the reed valve (70) fully open. As a result, the compressor (1) can increase the flow rate of intermediate-pressure refrigerant flowing into the cylinder chamber (15, 25) by the injection mechanism (40).

In the present embodiment, the width of the second inclined surface (48) in the third direction is greater than the width of the movable portion (73) in the third direction. Thus, the intermediate-pressure refrigerant flowing along the second inclined surface (48) is likely to interfere with the entire movable portion (73) in the third direction. This allows the intermediate-pressure refrigerant to easily keep the reed valve (70) fully open. As a result, the compressor (1) can increase the flow rate of intermediate-pressure refrigerant flowing into the cylinder chamber (15, 25) by the injection mechanism (40).

In the present embodiment, the first inclined surface (47) and the second inclined surface (48) are formed as a single tapered surface. Thus, when processing the first inclined surface (47) and the second inclined surface (48), the first inclined surface (47) and the second inclined surface (48) can be formed simultaneously by processing the single tapered surface. This allows easy processing of the first inclined surface (47) and the second inclined surface (48).

In the present embodiment, in the second direction, the distance (D1) between the valve seat surface (58) and the boundary (B) between the first inclined surface (47) and the straight portion (43a) of the branch flow path (43) is longer than the distance (D2) between the valve seat surface (58) and the bottom surface of the groove (59). This can make the first inclined surface (47) longer, allowing the refrigerant to easily flow from the first flow path (42, 43) toward the second flow path (45). Thus, the compressor (1) can increase the flow rate of intermediate-pressure refrigerant flowing into the cylinder chamber (15, 25) by the injection mechanism (40). Conversely, the groove (59) can be made shallow, and the amount of the volume that does not contribute to the compression of the refrigerant (dead volume) can be reduced. The reduction in the dead volume increases the amount of intermediate-pressure refrigerant discharged from the outflow port (44) and flows into the cylinder chamber (15, 25). This also allows the compressor (1) to increase the flow rate of intermediate-pressure refrigerant flowing into the cylinder chamber (15, 25) by the injection mechanism (40).

### <Variations>

The above-described embodiment may be modified as follows.

### -First Variation-

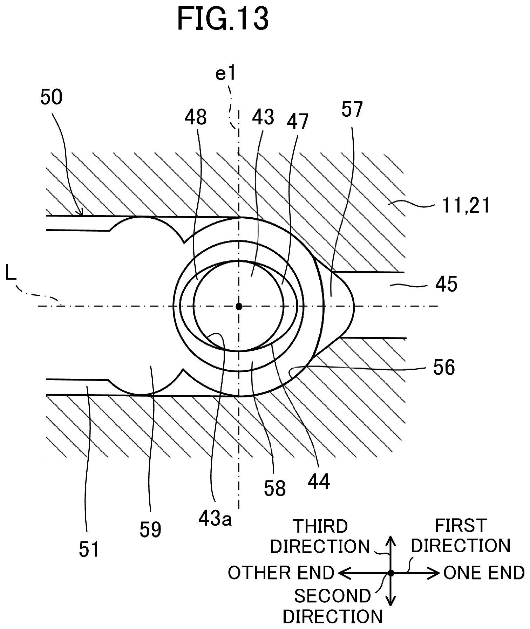

In an injection mechanism (40) of a first variation shown in FIG. 13, the first inclined surface (47) and the second inclined surface (48) are not continuous. Each of the first inclined surface (47) and the second inclined surface (48) is formed in a crescent shape as viewed in the second direction. The inclination angles of the first inclined surface (47) and the second inclined surface (48) with respect to the second direction are the largest on the center line (L), and are 0 degrees on the first line (e1). The inclination angles gradually decrease toward the first line (e1) between the center line (L) and the first line (e1). The outflow port (44) is formed in an elliptical shape as viewed in the second direction.

In the configuration of the first variation, the intermediate-pressure refrigerant flowing through the branch flow path (43) also flows along the first inclined surface (47) toward the introduction passage (45). This reduces the flow resistance of the refrigerant coming from the branch flow path (43) toward the introduction passage (45), increasing the flow rate of the intermediate-pressure refrigerant to the cylinder chamber (15, 25). In addition, part of the intermediate-pressure refrigerant flowing through the branch flow path (43) flows toward the reed valve (70) along the second inclined surface (48). This can push the reed valve (70) up, increasing the flow rate of intermediate-pressure refrigerant flowing into the cylinder chamber (15, 25) by the injection mechanism (40).

### -Second Variation-

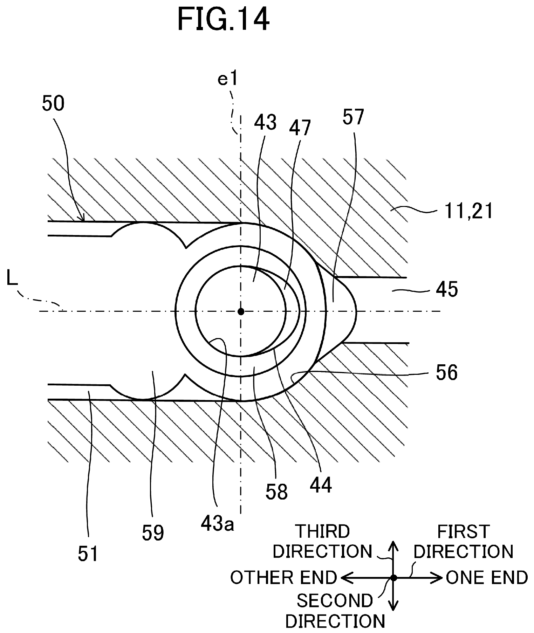

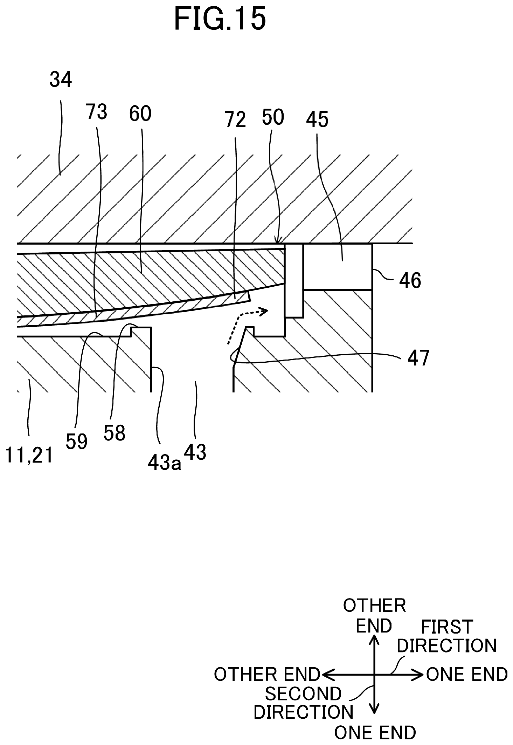

In an injection mechanism (40) of a second variation shown in FIGS. 14 and 15, only the first inclined surface (47) is formed without forming the second inclined surface (48). The first inclined surface (47) is formed in a crescent shape as viewed in the second direction. The inclination angle of the first inclined surface (47) with respect to the second direction is the largest on the center line (L) and is 0 degrees on the first line (e1). The inclination angle gradually decreases toward the first line (e1) between the center line (L) and the first line (e1). In the inner surface of the branch flow path (43), the straight portion (43a) extends to the valve seat surface (58) on the other end side of the first line (e1) in the first direction. When viewed in the second direction, a portion of the outflow port (44) on the other end side of the first line (e1) in the first direction is formed in a semi-circular shape, and a portion on the one end side of the first line (e1) in the first direction is formed in a curved shape protruding toward the one end.

In the configuration of the second variation, the intermediate-pressure refrigerant flowing through the branch flow path (43) also flows along the first inclined surface (47) toward the introduction passage (45). This reduces the flow resistance of the refrigerant coming from the branch flow path (43) toward the introduction passage (45), increasing the flow rate of the intermediate-pressure refrigerant flowing into the cylinder chamber (15, 25) by the injection mechanism (40).

### -Third Variation-

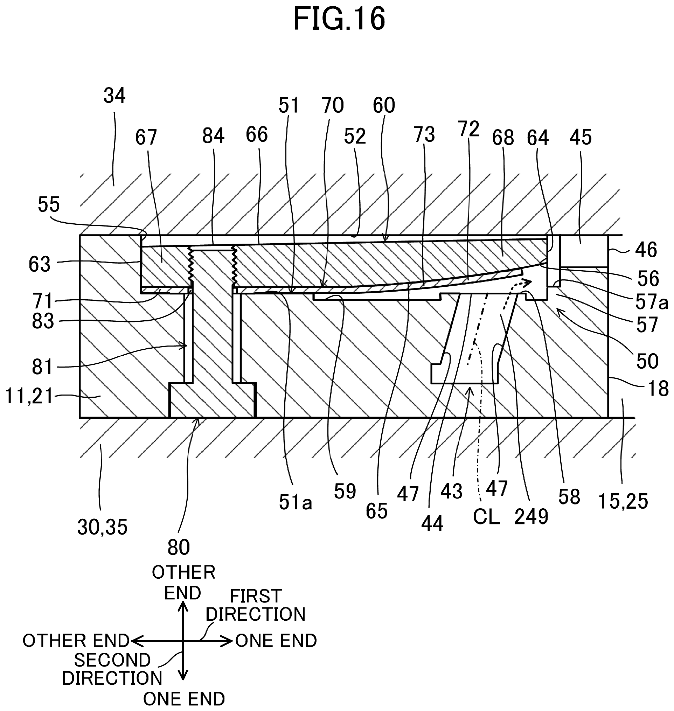

In an injection mechanism (40) of a third variation shown in FIG. 16, the branch flow path (43) includes an inclined flow path (249) inclined toward the one end in the first direction with respect to the second direction so that a flow path center line (CL) approaches the introduction passage (45) as the inclined flow path (249) extends toward the bottom surface (51). In the cross section passing through the center line (L) of the reed valve (70) extending in the first direction and including the second direction, the inclined flow path (249) includes the first inclined surface (47). The first inclined surface (47) is formed at both of one end side and the other end side of the flow path center line (CL) in the first direction as viewed in the third direction.

In the configuration of the third variation, the intermediate-pressure refrigerant flowing through the inclined flow path (249) flows along the first inclined surface (47) toward the introduction passage (45). In particular, the intermediate-pressure refrigerant flows toward the introduction passage (45) also in a portion of the inclined flow path (249) at the other end in the first direction. This reduces the flow resistance of the refrigerant coming from the branch flow path (43) toward the introduction passage (45), increasing the flow rate of the intermediate-pressure refrigerant flowing into the cylinder chamber (15, 25) by the injection mechanism (40).

### <Other Embodiments>

The air conditioner (100) may perform only the cooling operation or the heating operation. The refrigeration cycle apparatus may be a refrigeration apparatus that cools the inside of a storage, a hot water supply unit that generates hot water, or a chilling unit that generates cold water.

The compressor (1) may be a rolling piston rotary compressor. In this case, the roller and the vane of the compression mechanism are formed separately. The tip of the vane is pressed against the outer peripheral surface of the roller. When the roller rotates eccentrically, the vane moves back and forth in the radial direction of the cylinder.

The compressor (1) may be a hinge-vane rotary compressor. In this case, the roller and the vane of the compression mechanism are formed separately. The tip of the vane is connected to the roller via a hinge. The vane is displaceable relative to the roller. When the roller rotates eccentrically, the vane moves back and forth in the radial direction of the cylinder.

The compression mechanism (10) may be a single-cylinder compression mechanism having one cylinder. In this case, the injection mechanism (40) has an injection element corresponding to the one cylinder.

The valve chamber (50) and the valve retainer (60) may have a rectangular shape or an elliptical shape as viewed in the second direction.

The width of the first inclined surface (47) in the third direction may be the same as or smaller than the width (W1) of the introduction passage (45) in the third direction. The width of the second inclined surface (48) in the third direction may be the same as or smaller than the width (W2) of the movable portion (73) in the third direction.

In the first cross section, the inclination angle of the first inclined surface (47) with respect to the second direction may be different from the inclination angle of the second inclined surface (48) with respect to the second direction.

In the first cross section, the inclination angle of the first inclined surface (47) and the second inclined surface (48) with respect to the second direction may not be constant. Each of the first inclined surface (47) and the second inclined surface (48) may be configured such that the inclination angle with respect to the second direction increases stepwise as the first inclined surface (47) and the second inclined surface (48) extend toward the bottom surface (51), or may be an inclined curved surface.

The refrigerant need not be carbon dioxide, and may be, for example, an HFC-based refrigerant.

### <Additional Remarks>

While the embodiments and variations thereof have been described above, it will be understood that various changes in form and details may be made without departing from the spirit and scope of the claims. The embodiments, the variation thereof, and the other embodiments may be combined and replaced with each other without deteriorating intended functions of the present disclosure.

The expressions such as "first," "second," "third," . . . , described above are used to distinguish the terms to which these expressions are given, and do not limit the number and order of the terms.

### INDUSTRIAL APPLICABILITY

As described above, the present disclosure is useful for a rotary compressor and a refrigeration cycle apparatus.

### DESCRIPTION OF REFERENCE CHARACTERS

- 1: Compressor
- 10: Compression Mechanism
- 11, 21: Cylinder
- 12, 22: Roller
- 13, 23: Vane
- 15, 25: Cylinder Chamber
- 15a, 25a: Suction Chamber
- 15b, 25b: Compression Chamber
- 39: Injection Pipe
- 40: Injection Mechanism
- 42, 43: First Flow Path
- 44: Outflow Port
- 45: Introduction Passage (Second Flow Path)
- 47: First Inclined Surface
- 48: Second Inclined Surface
- 50: Valve Chamber
- 51: Bottom Surface
- 58: Valve Seat Surface
- 59: Recessed Groove
- 60: Valve Retainer
- 70: Reed Valve
- 71: Base Portion
- 72: Tip Portion
- 73: Movable Portion
- 249: Inclined Flow Path
- L: Center Line
- CL: Flow Path Center Line

## Claims

1. A rotary compressor, comprising:
a drive shaft (7);
a compression mechanism (10) including an annular cylinder (11, 21), a roller (12, 22) configured to be driven by the drive shaft (7) and eccentrically rotate in the cylinder (11, 21), a vane (13, 23) configured to partition a cylinder chamber (15, 25) between the cylinder (11, 21) and the roller (12, 22) into a suction chamber (15a, 25a) and a compression chamber (15b, 25b), a suction port (17, 27) configured to send a low-pressure refrigerant to the suction chamber (15a, 25a); and
an injection pipe (39), wherein
the compression mechanism (10) is provided with an injection mechanism (40) configured to introduce a refrigerant into the compression chamber (15b, 25b),
the injection mechanism (40) includes:
a valve chamber (50);
a first flow path (42, 43) that is configured to allow the injection pipe (39) and the valve chamber (50) to communicate with each other and has an outflow port (44) facing the valve chamber (50);
a reed valve (70) that is disposed in the valve chamber (50) and configured to open and close the outflow port (44) of the first flow path (42, 43);
a valve retainer (60) that is disposed in the valve chamber (50), extends in the first direction, has a thickness in the second direction, and is configured to regulate an operation of the reed valve (70); and
a second flow path (45) that is located at one end of the valve chamber (50) in the first direction and is configured to allow the valve chamber (50) and the compression chamber (15b, 25b) to communicate with each other,
an inner surface forming the valve chamber (50) has a first surface (51) facing the valve retainer (60) in the second direction across the reed valve (70) and having the outflow port (44), and
an inner surface forming the first flow path (42, 43) has a first inclined surface (47) that is continuous with the first surface (51) and is inclined toward the one end in the first direction with respect to the second direction to approach the second flow path (45) as the first inclined surface (47) extends toward the first surface (51).

2. The rotary compressor of claim 1, wherein
in a cross section passing through a center line (L) of the reed valve (70) extending in the first direction and including the second direction, the first inclined surface (47) is located at a portion of the inner surface forming the first flow path (42, 43) at the one end in the first direction.

3. The rotary compressor of claim 1 or 2, wherein
the reed valve (70) includes:
a base portion (71) that is formed at the other end of the reed valve (70) in the first direction and fixed to the valve retainer (60);
a tip portion (72) that is formed at one end of the reed valve (70) in the first direction and configured to open and close the outflow port (44); and
a movable portion (73) that is configured to connect the base portion (71) and the tip portion (72) and is movable toward the valve retainer (60) together with the tip portion (72),
in a cross section passing through a center line (L) of the reed valve (70) extending in the first direction and including the second direction, the inner surface forming the first flow path (42, 43) includes a second inclined surface (48) that is located at the other end in the first direction, continuous with the first surface (51), and inclined toward the other end in the first direction with respect to the second direction to be separated from the second flow path (45) as the second inclined surface (48) extends toward the first surface (51).

4. The rotary compressor of any one of claims 1 to 3, wherein
the reed valve (70) includes a tip portion (72) that is formed at one end of the reed valve (70) in the first direction and configured to open and close the outflow port (44), and
the first surface (51) includes:
a valve seat surface (58) that is configured to be in contact with the tip portion (72) of the reed valve (70) in a closed state; and
a groove (59) that is formed around the valve seat surface (58) and overlaps an outer edge of the tip portion (72) as viewed in the second direction,
the inner surface forming the first flow path (42, 43) includes a straight portion (43a) located upstream of the first inclined surface (47) and extending in the second direction, and
in the second direction, a distance (D1) between the valve seat surface (58) and a boundary (B) between the first inclined surface (47) and the straight portion (43a) is longer than a distance (D2) between the valve seat surface (58) and the bottom surface of the groove (59).

5. The rotary compressor of claim 1, wherein
the first flow path (42, 43) includes an inclined flow path (249) that includes the first inclined surface (47) and is inclined toward the one end in the first direction with respect to the second direction so that a center line (CL) of the first flow path (42, 43) approaches the second flow path (45) as the inclined flow path (249) extends toward the first surface (51).

6. A refrigeration cycle apparatus comprising a refrigerant circuit (101) including the rotary compressor (1) of any one of claims 1 to 5.
